# EUROPÄISCHE PATENTSCHRIFT

(11) **EP 0 662 036 B1**
(45) Veröffentlichungstag und Bekanntmachung des Hinweises auf die Patenterteilung: **19.02.1997**
(21) Anmeldenummer: 93918979.1
(22) Anmeldetag: 13.09.1993
(51) Int. Cl.: B29C 47/92

(54) **VORRICHTUNG UND VERFAHREN ZUR REGELUNG DER WULSTGRÖSSE IM GLÄTTWERK**
DEVICE AND PROCESS FOR CONTROLLING THE BEAD SIZE IN THE GLAZING ROLLS
DISPOSITIF ET PROCEDE POUR REGLER LA GRANDEUR DE BOURRELET DANS UNE CALANDRE FINISSEUSE

(30) Priorität: 15.09.1992 DE 9212406 U
(43) Veröffentlichungstag der Anmeldung: 12.07.1995
(73) Patentinhaber: GROSS, Heinz, Dr.-Ing., D-64380 Rossdorf (DE)
(72) Erfinder: GROSS, Heinz, Dr.-Ing., D-64380 Rossdorf (DE)
(74) Vertreter: Katscher, Helmut, Dipl.-Ing.
(86) Internationale Anmeldenummer: DE9300842
(87) Internationale Veröffentlichungsnummer: WO9406616

(56) Entgegenhaltungen:
- WO-A-89/10834
- DE-A- 2 338 305
- DE-A- 2 363 467
- DE-A- 3 435 059
- DE-U- 9 208 837
- PATENT ABSTRACTS OF JAPAN vol. 10, no. 66 (M-461)(2123) 15. April 1986 & JP,A,60 210 418 (MITSUBISHI JUKOGYO K.K.)
- AUTOREN: U. BURKHARDT ET AL. 'Handbuch der Kunststoff-Extrusionstechnik/Bd. 1 Grundlagen' 1989 , PROF DR. F. HENSEN ET AL. , CARL HANSER VERLAG MüNCHEN WIEN siehe Seite 559, Zeile 20 - Zeile 21

## Beschreibung

### Gebiet der Erfindung

Die Erfindung betrifft ein Verfahren zur Regelung der Wulstgröße im Glättwerkspalt bei der Extrusion von dünnen beidseitig geglätteten Kunststoffbahnen mittels einer kontinuierlichen Messung der Orientierungsdoppelbrechung an verschiedenen Stellen über der Breite der extrudierten Kunststoffbahn. Dadurch wird unter der Voraussetzung eines über der Breite der Walzen konstanten Glättspaltes eine genaue Durchsatzregelung an der dem Extruder nachgeschalteten Düse möglich.

### Stand der Technik

Bei der Herstellung von extrudierten Kunststoffbahnen, beispielsweise aus thermoplastischen Kunststoffen, ist es vorrangiges Ziel, eine möglichst einheitliche Dicke und ein homogenes Eigenschaftsprofil über der gesamten Fläche der Bahn zu erreichen. Dies gilt insbesondere für Kunststoffolien, das heißt Kunststoffbahnen mit einer Dicke von weniger als 2 mm.

Hauptursache für Unregelmäßigkeiten von Kunststoffbahnen sind meist Unterschiede über der Breite des Austrittsspaltes des aus der Breitschlitzdüse austretenden Schmelzestromes. Diese Schmelzestromunterschiede ergeben, wenn man einen parallelen Walzenspalt voraussetzt, zwangsläufig Unterschiede in der Höhe des Schmelzevorrates -im Folgende Wulst genannt- im Glättspalt. Auf Grund der variierenden Wulstgrößen ergeben sich im Glättspalt unterschiedliche Drücke und damit unterschiedliche Schmelzestromgeschwindigkeiten. Dies muß zwangsläufig zu Dickenunterschieden im Endprodukt führen. Bei zu großem Wulst entstehen sogenannte Wulstroller auf der Oberfläche der Bahn, bei nicht vorhandenem Wulst berührt die Kunststoffschmelze in aller Regel wenigsten eine Oberfläche des Glättwerkes nicht. An diesen Stellen tritt eine Unterschreitung der gewünschten Solldicke in der Bahn auf. Eine kontinuierliche Überprüfung und Korrektur des Wulstes während der Extrusion ist deshalb sehr hilfreich. DE-OS 35 43 632 beschreibt eine zeitaufgelöste Methode zur Bestimmung der Dicke und der Orientierung von Kunststoffolien mittels polarisiertem Licht.

Zahlreiche Publikationen beschäftigen sich mit der Foliendickenbestimmung per Infrarot-Absorbtionsspektroskopie, deren Prinzipien von W. E. Van Horne beschrieben werden (Tappi 58(4), Seiten 111 bis 114, 1975). In DE-OS 32 30 442 wird ein Verfahren beschrieben, das Meßfehler, die beispielsweise durch Inhomogenitäten im Folienmaterial hervorgerufen werden, bei der Foliendickenbestimmung über IR-Absorbtionsspektroskopie eliminiert. P. A. Fluornoy et al. stellen in Appl. Optics 11(9), Seiten 1907 bis 1915 (1972) ein Gerät zur Dickenbestimmung an Folien und deren Beschichtungen mittels Interferometrie vor. Es kann zur Dickenmessung an frei laufenden Folien in Transmission oder Reflexion eingesetzt werden. Der Grundaufbau sieht eine Lichtquelle mit kontinuierlichem Spektrum vor, deren Licht an der Vorder- und an der Rückseite der zu vermessenden Folie reflektiert wird. Der entstehende Gangunterschied, der proportional zur Schichtdicke ist, wird in einem Michelson-Interferometer bestimmt.

Eine berührungslose und kontinuierliche Meßmethode zur Bestimmung der Dicke von elektrisch nicht leitenden Materialien, insbesondere Bahnen aus polymerem Material, wird in DE-OS 40 11 646 vorgestellt. Hier wird über einen Luftstrom mittels Luftdruck ein bestimmter Abstand zwischen Meßsonde und Materialbahn realisiert.

DE-OS 36 31 652 beschreibt eine Meßanordnung zur zerstörungsfreien, berührungslosen Bestimmung der Dicke von Folien und dünnen Oberflächenbeschichtungen mittels instationärer Wärmeleitung.

In der DE 38 43 300 wird eine Meßvorrichtung zur Bestimmung der Dicke von Folien, insbesondere von Kunststoffolien beschrieben, bestehend u. a. aus einer Walze, auf der über einem Teil ihres Umfanges die Folie anliegt und mit einem Lichtstrahl, der tangential an demjenigen Bereich der Walze streifend vorbeigeführt wird, auf dem die Folie liegt, gekennzeichnet dadurch, daß der Lichtstrahl hinter der Walze über seine gesamte Breite mit einem Lichtsensor gemessen wird. Die angesprochenen Verfahren ermitteln lediglich die Dickenverteilung einer Kunststoffbahn ohne damit Rückschlüsse auf ihre Ursachen zu liefern.

GR-Patent 85.1420 beschreibt Verfahren und Vorrichtung zur Herstellung einer extrudierten geglätteten Kunststoffbahn durch Extrusion einer thermoplastischen Formmasse mittels einer Breitschlitzdüse und Glätten des extrudierten Schmelzestranges unter Ausbildung eines Wulstes aus thermoplastischer Formmasse vor dem Walzenspalt des Glättwerkes. Die Größe des Wulstes wird ermittelt, indem die Oberflächentemperatur der Bahn nach dem Austritt aus dem Walzenspalt gemessen wird. Beim Überschreiten der zum konstanten Betriebszustand im kontinuierlichen Betrieb gehörenden Solltemperatur der Folienoberfläche wird der Schmelzeausstoß vergrößert, beim Unterscheiten vermindert. Dadurch werden Oberflächenstörungen vermieden, die bei fehlendem Wulst oder unterschiedlicher Wulstgröße auftreten.

In G 92 08 837.6 wird eine Vorrichtung zur Eliminierung des Walzenschlageinflusses auf die Steuerung der Dickenverteilung einer extrudierten, oberflächengeglätteten Folie beschrieben. Kennzeichnend ist, daß ein gleichmäßiges Wulstprofil an der Glätwerkwalze durch eine traversierende Wulstdickenmessung und/oder durch eine traversierende Bahndickenmessung erzeugt wird. Diese Informationen werden zur Regelung des aus der Düse austretenden Schmelzestromes benutzt.

Die im Stand der Technik angeführten Methoden zur Bestimmung von Dicken von extrudierten Kunststoffbahnen oder -folien können bei der Herstellung im Glättbetrieb nicht direkt zur automatischen Steuerung des aus der Düse austretenden lokalen Schmelzestromes verwendet werden, da die gemessenen Dickenunterschiede auch auf andere Ursachen als auf Schmelzestromunterschiede zurückzuführen sein können. So können sie zum Beispiel eine Folge der sich auf Grund der Spaltkräfte ergebenden Walzendurchbiegung sein, oder auf herstellungsbedingte Unrundheiten der Glättwalzen (Walzenschlag) beruhen. Die Verwendung einer Bahndickenmessung zur Regelung des aus der Düse austretenden Schmelzestromes ist somit bei der Herstellung von geglätteten Bahnen höchst fragwürdig.

In GR 85.1420 wird ein Verfahren für eine Düsenregelung über die Messung der Wulsthöhe beschrieben. Die dabei benutzte Messung der Bahnoberflächentemperaturen löst allerdings sehr kleine Wulstgrößenunterschiede, wie sie speziell bei der Herstellung sehr dünner Folien auftreten, nicht mehr ausreichend auf. Zusätzlich werden auf Grund der traversierenden Messung vorhandene Dickenschwankungen in Abzugsrichtung, z.B. auf Grund von Walzenschlag im Glättwerk, als Dickenschwankungen über der Breite fehlinterpretiert.

Mit der in G 92 08 837.6 beschriebenen Methode wird wenigstens das Problem der Dickenschwankungen, die durch Walzenschlag im Glättwerk hervorgerufen werden, eliminiert. Durch eine zweimalige um die Hälfte eines Walzenumfanges versetzte Messung und anschließender Mittelwertbildung werden die auf Grund des Walzenschlages in Abzugsrichtung sinusförmigen Meßwertschwankungen kompensiert.

### Aufgabe und Lösung

Der Erfindung liegt die Aufgabe zu Grunde, eine Vorrichtung zur Ermittlung der Wulsthöhe im Glättwerkspalt bei der Extrusion von oberflächengeglätteten, transparenten Kunststoffbahnen zu entwickeln.

Die Aufgabe wird erfindungsgemäß gelöst indem die Vorrichtung mindestens einen Sensor zur Messung der Orientierungsdoppelbrechung an der extrudierten Bahn im Temperaturbereich unterhalb der Glasübergangstemperatur des Kunststoffes nach Verlassen des Glättwerkes und einen Rechner, der nach vorgegebenen Algorithmen die Meßwerte in Wulsthöhen umrechnet, enthält. Vorteilhafterweise wird das durch den Meßsensor erzeugte und im Rechner verarbeitete Signal zur Regelung des aus der Düse austretenden Massestromes über der Breite der Extrusionsdüse verwendet, um eine gleichmäßige Wulsthöhe über der Breite des gesamten Glättwerkes einzustellen.

Es war weiterhin Aufgabe der Erfindung ein neuartiges Verfahren zur Herstellung dünner, beidseitig geglätteter Bahnen aus thermoplastischen Kunststoffen, unter Verwendung eines Extruders zum Aufschmelzen und Fördern des Granulates, einer Breitschlitzdüse zum Ausformen der Schmelze, einem Glättwerk zum Abkühlen und Glätten der Schmelze und einem Abzug zum Abziehen der Bahn zu entwickeln, mit dem Bahnen mit einem verbesserten Eigenschaftsprofil hergestellt werden können.

Die Aufgabe wird erfindungsgemäß dadurch gelöst, daß hinter dem Glättwerk die in der Bahn vorhandene Doppelbrechung an mehreren Stellen über der Breite der Bahn gemessen wird, und daß die Meßwerte einem Rechner zugeführt werden, der, entsprechend den gemessenen Unterschieden, Stellwerte berechnet, und diese dann den über der Breite der Extrusionsdüse verteilten Stellmitteln zuführt, und daß die Stellmittel den Fließkanalwiderstand in der Düse in dem durch die Stellwerte vorgegebenem Maße verändern und so eine gleichmäßige Wulsthöhe im Glättwerkspalt erreichen. Vorteilhaft kann ein traversierender Meßsensor die Orientierungsdoppelbrechung an der extrudierten Kunststoffbahn bestimmen, wobei der Sensor jeweils um einen halben Walzenumfang versetzte Werte erfaßt, und der Mittelwert aus diesen beiden Messungen als Führungsgröße für den Rechner benutzt wird. Es können aber auch mehrere Meßsensoren, die die Orientierungsdoppelbrechung an der extrudierten Kunststofbahn ermitteln, in einer Linie senkrecht zur Bahnabzugsrichtung angeordnet werden, wobei die Meßsensoren simultan an verschiedenen Stellen über der Breite der Kunststoffbahn die Orientierungsdoppelbrechung bestimmen und diese Werte dem Rechner zuführen. Dieses Verfahren ist besonders gut geeignet für Kunststoffbahnen, die Aromatenanteile, wie zum Beispiel Polystyrol und Polycarbonat, enthalten und deren Dicke zwischen 0,05 und 2 mm liegen.

### Durchführung der Erfindung

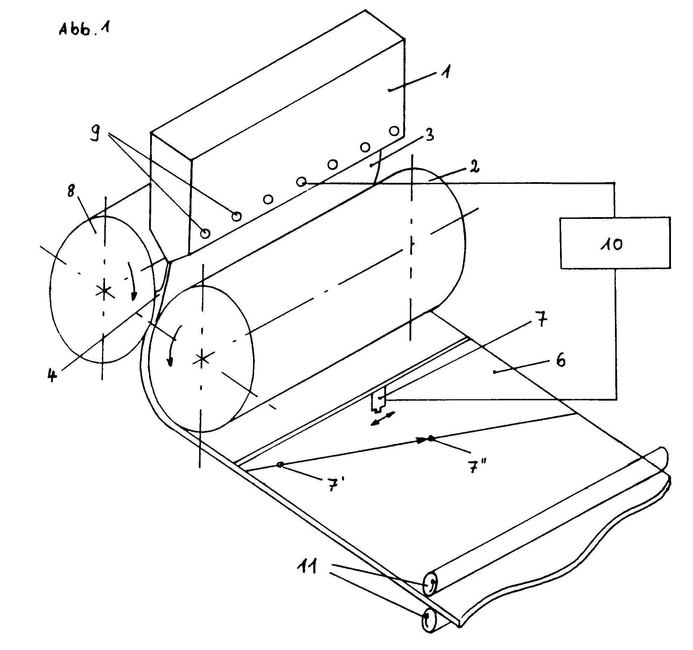

Abbildung 1 zeigt die erfindungsgemäße Vorrichtung in perspektivischer Darstellung.

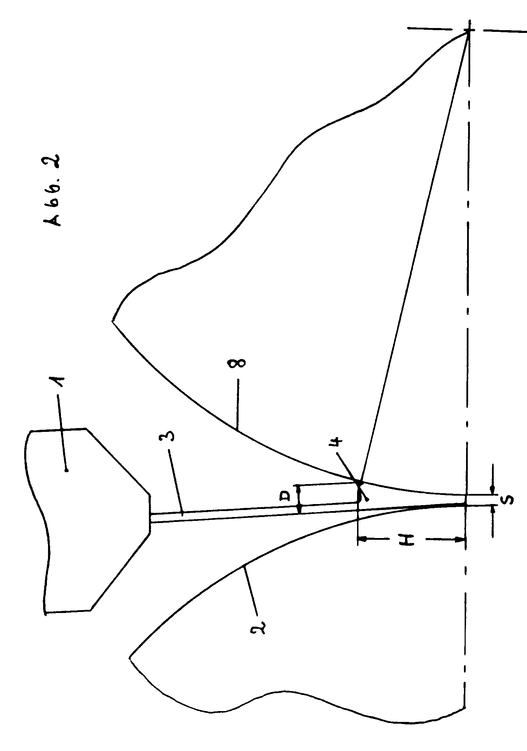

Abbildung 2 zeigt eine Seitenansicht des Glättspaltbereiches in vergrößerter Darstellung.
Die die Extrusionsdüse 1 verlassende Polymerschmelze 3 wird auf die Glättwerkwalzen 2, 8 zur Abkühlung und Oberflächenglättung gebracht und vom Abzug 11 von diesen wieder abgezogen. Dabei bildet sich ein Schmelzewulst 4 aus. Lokale Schwankungen in der Wulsthöhe H, die durch lokale Massestromunterschiede in der die Extrusionsdüse 1 verlassenden Polymerschmelze 3 hervorgerufen werden können, führen zu unterschiedlichen Druckverteilungen im Wulstbereich 4 bzw. im Glättspalt. Zwangsläufig ergeben sich dann auch Unterschiede im Geschwindigkeitsprofil der durch den Glättspalt durchtretenden Schmelze. Auf Grund der veränderten Geschwindigkeitsprofile resultieren aber gleichzeitig Unterschiede in den in der Bahn eingefrorenen Molekülorientierungen.

Durch eine Messung der Orientierungsdoppelbrechung über der Breite der Bahn 6, beispielsweise mittels eines die Bahn 6 traversierenden Meßsensors 7, können auf Grund der geschilderten Zusammenhänge Meßsignale für optisch nicht mehr wahrnehmbare Unterschiede in der Wulsthöhe H erzeugt werden. Diese werden für eine lokale Steuerung des Polymerschmelzestromes 3 am Ausgang der Extruderdüse 1, beispielsweise durch automatisch mittels Wärmedehnbolzen oder Stellmotoren gesteuerte Stellelemente 9 in der Extrusionsdüse 1, verwendet.

Sind zum Beispiel über der Breite des Glättwerkes unterschiedliche Wulsthöhen vorhanden, so ergeben sich an den Stellen mit höherem Wulst auch höhere Doppelbrechungswerte, da im Glättspalt auf Grund des höheren Druckes eine größere Ausrichtung der Polymermoleküle in Abzugsrichtung erfolgt. Diese Unterschiede kann man durch Bestrahlung mit linear polarisiertem Licht meßtechnisch erfassen (vgl. hierzu: Vieweg/Braun, Kunststoff-Handbuch, Band 1, Seite 193 ff, Carl Hanser, München Wien, 1975).

Im Falle der Abkühlung der Schmelzebahn auf Glätt- bzw. Kühlwalzen werden die Orientierungen sehr schnell eingefroren, so daß eine Relaxation kaum mehr möglich ist. Es werden zum Beispiel im Spezialfalle, wenn die Dicke der Schmelzebahn 3 genau der Größe des Glättspaltes S entspricht, keine neuen Molekülorientierungen entstehen, da die Schmelze mit einem blockförmigen Geschwindigkeitsprofil den Glättspalt durchströmt. Das ist dann der Fall, wenn die Glättwalze 8 die Bahn nur noch linienförmig berührt, oder anders ausgedrückt , wenn überhaupt kein Wulst 4 vorhanden ist.

In diesem Fall durchströmt die Schmelze den Glättspalt mit einem blockförmigen Geschwindigkeitsprofil. Die Schmelze wird dabei über ihre gesamte Dicke exakt mit der Umfangsgeschwindigkeit der Glätt- bzw. Kühlwalzen durch den Glättspalt hindurchtreten. Es ergibt sich auf Grund der fehlenden Relativgeschwindigkeiten der Schmelze im Bereich des Glättspaltes und damit der fehlenden Molekülorientierung eine sehr niedrige Doppelbrechung. In dem Moment, wo im Glättspalt ein Wulst entsteht, geht das Strömungsprofil im Glättspalt in ein parabelförmiges über, und die Orientierungsdoppelbrechung steigt mit zunehmender Wulstgröße an. Die Orientierung der Polymermoleküle ist folglich um so größer, je größer der Unterschied zwischen der Wulstdicke D und dem Glättwerkspalt S ist.

Werte der lokalen Doppelbrechungsmessung 7', 7'' werden vom Rechner 10 in Steuerbefehle umgewandelt. An den korrespondierenden Stellen innerhalb der Extrusionsdüse 1 wird dann der Polymerschmelzestrom z. B. durch Verändern des Lippenspaltes mittels der ansteuerbaren Stellelemente 9 der Düse korrigiert. Das erfindungsgemäße Verfahren eignet sich zur Herstellung von Kunststoffbahnen aus transparenten Kunststoffen, insbesondere aus solchen mit einer hohen intrinsichen Doppelbrechung wie beispielsweise Polycarbonat, Polystyrol, Polybutylenterephtalat oder weiteren Kunststoffen mit Aromatenanteilen (vgl. zur Verarbeitung auch beispielsweise E. C. Bernhardt, Processing of Themoplastic Materials, Reinhold Publishing Corporation, New York, 1959).

### Vorteilhafte Wirkungen der Erfindung

Die traversierende Messung 7 der Orientierungsdoppelbrechung an der extrudierten Bahn liefert den Schmelzestromunterschieden proportionale Meßwerte. Diese Werte werden mit den vorgegebenen Sollwerten im Rechner 10 verglichen. Der Regler 10 berechnet dann Stellgrößen, mit denen die jeweiligen Stellschrauben 9 an der Düse nachgestellt werden. Auf diese Weise kann ein sehr gleichmäßiges Profil der Wulsthöhe H eingestellt werden, was zu einer sehr gleichmäßigen Dicke der extrudierten, oberflächengeglätteten Bahn führt. Die Verwendung der Orientierungsdoppelbrechung als Führungsgröße für den Regelprozeß hat weitere verfahrenstechnische Vorteile. Da die Orientierungsdoppelbrechung ebenfalls mit den mechanischen Eigenschaften der Bahn korrelieren, ergibt sich automatisch bei dieser Vorgehensweise ein weitgehend konstantes Eigenschaftsprofil in den so hergestellten Bahnen. Will man Substrate für optisch lesbare Datenträger herstellen, so stellt dieses Verfahren quasi sicher, daß die benötigten geringen Gangunterschiede auch eingehalten werden. In diesen Fällen sollte man grundsätzlich diese Verfahrenstechnik anwenden.

### BEISPIEL

Extrusion einer Folie aus Bisphenol-A-Polycarbonat.

Die Schmelztemperatur am Austritt der Extrusionsdüse 1 beträgt 280 °C. Die Schmelze wird auf den hochglanzpolierten, verchromten Walzen 2, 8 die eine Oberflächentemperatur von 100 °C aufweisen, abgekühlt und zu einer Folie von einer mittleren Dicke von 500 µm verpreßt.

Die Messung des Gangunterschiedes dn an der extrudierten Folienbahn 6 erfolgt mit dem Doppelbrechungsmeßgerät OEM-3-LIN der Fa. ISEDD (4800 Bielefeld, Eckendorfer Str. 10) und beruht auf dem oben genannten polarisationsoptischen Prinzip. Der gemessene Gangunterschied an der Folienbahn 6 wird als lokaler Istwert dem Regler 10 zugeführt Zur lokalen Einstellung der Extrusionsdüse 1 werden die gemessenen Werte im Rechner mit dem Sollwert verglichen. Entsprechend der Soll-Ist-Wertabweichung wird im Rechner eine Stellgröße für jeden einzelnen Stellbolzen 9 berechnet und an die Stelleinheit übergeben. Die Abzugsgeschwindigkeit der 1,50 m breiten Folienbahn beträgt 10 m/min. Der durch die gleichmäßig klein gehaltene Wulstdicke bedingte Gangunterschied dn beträgt bei einer Foliendicke von 500 µm maximal 50 nm ±10 %.

## Patentansprüche

1. Vorrichtung zur Ermittlung der Wulsthöhe (H) im Glättwerkspalt bei der Extrusion von oberflächengeglätteten, transparenten Kunststoffbahnen (6), dadurch gekennzeichnet, daß die Vorrichtung mindestens einen Sensor (7) zur Messung der Orientierungsdoppelbrechung an der extrudierten Bahn (6) im Temperaturbereich unterhalb der Glasübergangstemperatur des Kunststoffes nach Verlassen des Glättwerkes und einen Rechner (10), der nach vorgegebenen Algorithmen die Meßwerte in Wulsthöhen (H) umrechnet, enthält.

2. Vorrichtung zur Ermittlung der Wulsthöhe gemäß Anspruch 1, dadurch gekennzeichnet, daß das durch den Meßsensor (7) erzeugte und im Rechner (10) verarbeitete Signal zur Regelung des aus der Düse (1) austretenden Massestromes (3) über der Breite der Extrusionsdüse (1) verwendet wird, um eine gleichmäßige Wulsthöhe (H) über der Breite des gesamten Glättwerkes einzustellen.

3. Vorrichtung zur Ermittlung der Wulsthöhe gemäß den Ansprüchen 1 und 2, dadurch gekennzeichnet, daß mehrere Meßsensoren, die die Orientierungsdoppelbrechung an der extrudierten Kunststoffbahn (6) ermitteln, in einer Linie senkrecht zur Bahnabzugsrichtung angeordnet sind, wobei die Meßsensoren simultan an verschiedenen Stellen über der Breite der Kunststoffbahn die Orientierungsdoppelbrechung bestimmen.

4. Verfahren zur Herstellung dünner beidseitig geglätteter Bahnen (6) aus thermoplastischen Kunststoffen, unter Verwendung eines Extruders zum Aufschmelzen und Fördern des Granulates, einer Breitschlitzdüse (1) zum Ausformen der Schmelze, einem Glättwerk zum Abkühlen und Glätten der Schmelze und einem Abzug (11) zum Abziehen der Bahn, dadurch gekennzeichnet, daß hinter dem Glättwerk die in der Bahn (6) vorhandene Doppelbrechung an mehreren Stellen über der Breite der Bahn gemessen wird, und daß die Meßwerte einem Rechner (10) zugeführt werden, der entsprechend den gemessenen Unterschieden Stellwerte berechnet und diese dann den über der Breite der Extrusionsdüse verteilten Stellmitteln (9) zuführt, und daß die Stellmittel (9) den Fließkanalwiderstand in der Düse (1) in dem durch die Stellwerte vorgegebenem Maße verändern und so eine gleichmäßige Wulsthöhe (H) im Glättwerkspalt erreichen.

5. Verfahren nach Anspruch 4 dadurch gekennzeichnet, daß ein traversierender Meßsensor (7) die Orientierungsdoppelbrechung an der extrudierten Kunststoffbahn (6) bestimmt, wobei der Sensor jeweils um einen halben Walzenumfang versetzte Werte erfaßt und der Mittelwert aus diesen beiden Messungen als Führungsgröße für den Rechner (10) benutzt wird.

6. Verfahren nach Anspruch 4 dadurch gekennzeichnet, daß die Orientierungsdoppelbrechung an der extrudierten Kunststoffbahn (6) durch mehrere in einer Linie senkrecht zur Bahnabzugsrichtung angeordnete Meßsensoren ermittelt werden, wobei die Meßsensoren simultan an verschiedenen Stellen über der Breite der Kunststoffbahn (6) die Orientierungsdoppelbrechung bestimmen und diese Werte dem Rechner (10) zuführen.

7. Verfahren nach den Ansprüchen 4, 5 oder 6 dadurch gekennzeichnet, daß die Dicke der extrudierten, oberflächengeglätteten Kunststoffbahn (6) zwischen 0,05 und 2 mm liegt.

8. Verfahren nach den Ansprüchen 4, 5, 6 oder 7 dadurch gekennzeichnet, daß der verwendete die Kunststoffbahn (6) bildende Kunststoff Aromatenanteile enthält.

## Claims

1. Apparatus to detect the hight of the bead (H) in the nip of a roll stack during the extrusion of transparent webs with polished surfaces characterized in that:
at least one sensor (7) measures the birefringence of the extruded web (6) in the temperature range below the glass transition point of the plastic material over the whole width of the extrusion die after the web has passed the nip of the roll stack and one calculator (10) calculates from these measured temperature values the hights of the bead (H) according to an implemented algorithm.

2. Apparatus according to claim 1, characterized in that the signal which is created in the sensor (7) and which is modified in the computer (10) is used to control the melt stream (3) emerging out of the die (1) over its whole width to result in an even bead hight over the whole width of the inlet side of the roll stack nip.

3. Apparatus according to claim 1 and 2, characterized in that several sensors which are measuring the birefringence of the extruded web (6) are arranged in a line perpendicular to the direction of transport of the extruded web, while the sensors detect simultaniously the birefringence at different locations over the width of said web.

4. Method for producing a both-sided smooth-surfaced, thin web (6) of thermoplastic material by using an extruder to melt and to transport the granulate, a slit die (1) to form the melt, a roll stack to cool and smoothen the melt and a take off (11) to take the melt off characterized in that: the birefringence of the web (6) is measured at different locations over the width of the web and the measured values are feeded into a calculator (10) which calculates adjustable variables according to the measured differences and which feeds said adjustable variables to the controll elements (9) which are positioned over the width of the die and said controll elements (9) vary the flow resistance of the flow channel within the die in accordance with the calculated values to produce an uniform bead hight (H) at points along the nip inlet side of the roll stack.

5. Method according to claim 4, characterized in that a transversing sensor (7) measures the birefringence of the extruded web (6) by while the sensor measures always a pair of values which are divided by half a turn of the smoothing rolls and that the average value of said pair of measurements is used as adjustable value for the calculator (10).

6. Method according to claim 4, characterized in that the birefringence of the extruded web (6) is measured by several sensors which are arranged in a line perpendicular to the transport direction while the sensors detect the birefringence simultaniously at various locations over the width of the thermoplastic web (6) and direct said values to the calculator (10).

7. Method according to claim 4, 5 or 6, characterized in that the thickness of the extruded surface-smoothed web (6) varies between 0.05 and 2.0 mm.

8. Method according to claim 4,5 or 6, characterized in that the thermoplastic material used to create the web (6) includes aromatic molecules.

## Revendications

1. Dispositif permettant de déterminer la hauteur (H) du bourrelet dans l'interstice d'une calandre finisseuse lors de l'extrusion de bandes (6) de matière plastique transparente lissées en surface, caractérisé en ce que le dispositif comporte au moins un capteur (7) pour mesurer la biréfringence d'orientation sur la bande extrudée (6) dans la plage de températures qui se situe en dessous de la température de transition vitreuse de la matière plastique après qu'elle a quitté la calandre finisseuse, et un ordinateur (10) qui convertit, selon des algorithmes prédéterminés, les valeurs de mesure en hauteurs (H) du bourrelet.

2. Dispositif de détermination de la hauteur du bourrelet selon la revendication 1, caractérisé en ce que le signal produit par le capteur de mesure (7) et traité dans l'ordinateur (10) est utilisé pour régler le flux massique (3) sortant de la filière (1) sur la largeur de la filière d'extrusion (1) pour ajuster une hauteur (H) uniforme du bourrelet sur toute la largeur de la calandre finisseuse.

3. Dispositif de détermination de la hauteur du bourrelet selon les revendications 1 et 2, caractérisé en ce que plusieurs capteurs de mesure, qui déterminent la biréfringence d'orientation sur la bande (6) de matière plastique extrudée, sont agencés en ligne perpendiculairement à la direction de traction de la bande, lesdits capteurs de mesure déterminant la biréfringence d'orientation simultanément en différents emplacements sur la largeur de la bande de matière plastique.

4. Procédé de production de bandes minces (6) lissées deux faces constituées de matières plastiques thermoplastiques, en utilisant une extrudeuse pour faire fondre et acheminer les granulés, une filière plate (1) pour conformer la masse fondue, une calandre finisseuse pour refroidir et lisser la masse fondue et un dispositif d'entraînement (11) pour retirer la bande, caractérisé en ce que, derrière la calandre finisseuse, on mesure la biréfringence présente dans la bande (6) en plusieurs emplacements sur la largeur de la bande, en ce que les valeurs de mesure sont acheminées à un ordinateur (10) qui calcule, en fonction des différences mesurées, des valeurs de réglage qu'il achemine à des moyens de réglage (9) répartis sur la largeur de la filière (1) d'extrusion et en ce que les moyens de réglage (9) modifient la résistance du canal d'écoulement de la filière dans la mesure prédéterminée par les moyens de réglage et permettent d'obtenir ainsi une hauteur (H) uniforme du bourrelet dans l'interstice de la calandre finisseuse.

5. Procédé selon la revendication 4, caractérisé en ce qu'un capteur de mesure transversal (7) détermine la biréfringence d'orientation sur la bande (6) de matière plastique extrudée, ledit capteur détectant respectivement des valeurs décalées d'une demi-périphérie de cylindre et la valeur moyenne de ces deux mesures étant utilisée comme grandeur de référence pour l'ordinateur (10).

6. Procédé selon la revendication 4, caractérisé en ce que la biréfringence d'orientation sur la bande (6) de matière plastique extrudée est déterminée par plusieurs capteurs de mesure agencés en ligne perpendiculairement à la direction de traction de la bande, lesdits capteurs déterminant la biréfringence d'orientation simultanément en divers emplacements sur la largeur de la bande (6) de matière plastique et acheminant ces valeurs à l'ordinateur (10).

7. Procédé selon les revendications 4, 5 ou 6, caractérisé en ce que l'épaisseur de la bande (6) de matière plastique extrudée lissée en surface est comprise entre 0,05 et 2 mm.

8. Procedé selon les revendications 4, 5, 6 ou 7, caractérisé en ce que la matière plastique utilisée pour former la bande (6) de matière plastique contient des fractions aromatiques.
